# EUROPÄISCHE PATENTANMELDUNG

(11) **EP 1 952 685 A1**
(43) Veröffentlichungstag der Anmeldung: **06.08.2008**
(21) Anmeldenummer: 08001607.4
(22) Anmeldetag: 29.01.2008
(51) Int. Cl.: A01K 97/08

(54) **Vorrichtung zum Transport von Kopfruten**

(30) Priorität: 29.01.2007 DE 202007001511 U
(71) Anmelder: Mosella Angelgeräte GmbH, 54533 Laufeld (DE)
(72) Erfinder: König, Peter, 54533 Niederöfflingen (DE)
(74) Vertreter: Wieske, Thilo

(57) **Zusammenfassung**

Die Erfindung betrifft eine Vorrichtung zum Transport von Kopfruten.

Um eine Vorrichtung zum Transport von Kopfruten zu schaffen, die die Kopfruten während des Transportes schützt, wird im Rahmen der Erfindung vorgeschlagen, daß ein längliches Element vorgesehen ist, das an zwei gegenüberliegenden Seiten in Längsrichtung verlaufende Ausnehmungen mit halbkreisförmigem Querschnitt zur Aufnahme der Rutenelemente aufweist, und daß an einem Ende ein Endstück vorgesehen ist, welches eine sich von einer Ausnehmung zu der anderen Ausnehmung erstreckende halbkreisförmige Nut zur Aufnahme des Gummizuges der Kopfrute aufweist.

Diese Vorrichtung ermöglicht es, die demontierte Kopfrute sicher zu transportieren, indem die Enden jeweils zweier Rutenelemente in die halbkreisförmigen Ausnehmungen eingebracht und der die Enden verbindende Gummizug durch die Nut geführt wird.

## Beschreibung

Die Erfindung betrifft eine Vorrichtung zum Transport von Kopfruten.

Kopfruten sind Angelruten, die aus mehreren ineinander steckbaren Einzelelementen bestehen. Auch wenn die neuen Regeln des internationalen Anglerverbandes C.I.P.S. eine Längenbegrenzung bei Herren von 13 m und bei Damen und Jugendlichen von 11,50 m vorsehen, sind Kopfruten, bei denen Rutenlängen von 16,00 m erreicht werden, im Handel erhältlich. Kopfruten werden aufgrund ihrer großen Länge im demontierten Zustand transportiert und vor Gebrauch montiert. Da Kopfruten häufig aus hochwertigen Materialien, z.B. unter Verwendung von Carbonfasern, hergestellt werden, handelt es sich um relativ teure Angelgeräte, die eines sorgfältigen Transportes bedürfen.

Aufgabe der Erfindung ist es, eine Vorrichtung zum Transport von Kopfruten zu schaffen, die die Kopfruten während des Transportes schützt.

Diese Aufgabe wird erfindungsgemäß dadurch gelöst, daß ein längliches Element vorgesehen ist, das an zwei gegenüberliegenden Seiten in Längsrichtung verlaufende Ausnehmungen mit halbkreisförmigem Querschnitt zur Aufnahme der Rutenelemente aufweist, und daß an einem Ende ein Endstück vorgesehen ist, welches eine sich von einer Ausnehmung zu der anderen Ausnehmung erstreckende halbkreisförmige Nut zur Aufnahme des Gummizuges der Kopfrute aufweist.

Diese Vorrichtung ermöglicht es, die demontierte Kopfrute sicher zu transportieren, indem die Enden jeweils zweier Rutenelemente in die halbkreisförmigen Ausnehmungen eingebracht und der die Enden verbindende Gummizug durch die Nut geführt wird.

Eine Ausbildung der Erfindung besteht darin, daß das Endstück im sich von einer Ausnehmung zu der anderen Ausnehmung erstreckenden Kopfbereich halbkreisförmig ausgebildet ist.

Hierdurch wird erreicht, daß der Kopfbereich jeweils parallel zur Nut angeordnet ist.

Eine Weiterbildung der Erfindung besteht darin, daß das Endstück oberhalb der Ausnehmungen sich in Längsrichtung erstreckende Schlitze zur Aufnahme des Endes der Rutenelemente aufweist.

Hierdurch wird es möglich, das Endstück auf die Rutenelemente aufzustecken und festzulegen.

Weiterhin ist zur Erfindung gehörig, daß ein Klettbandverschluß zum Festlegen der Rutenelemente vorgesehen ist.

Der Klettbandverschluß ermöglicht ein Anpassen an unterschiedliche Rutendurchmesser.

Schließlich liegt es auch im Rahmen der Erfindung, daß die Vorrichtung aus Kunststoff besteht.

Durch Verwendung von relativ flexiblem Kunststoff wird sichergestellt, daß die Kopfruten während des Transportes gut geschützt sind.

Nachfolgend wird die Erfindung anhand von Zeichnungen eines Ausführungsbeispiels näher erläutert.

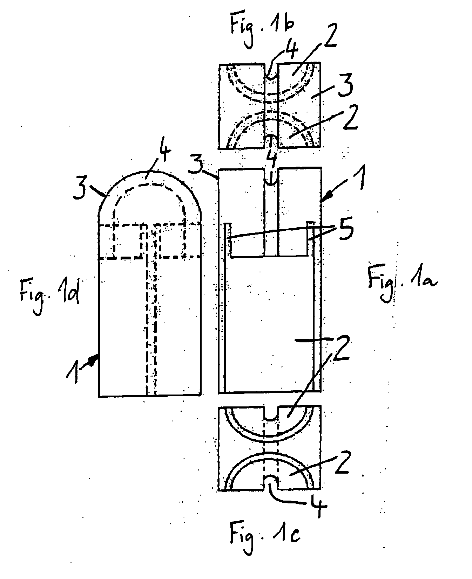

Es zeigen
- Fig. 1a: eine erfindungsgemäße Vorrichtung in Seitenansicht,
- Fig. 1b: in Draufsicht,
- Fig. 1c: von unten betrachtet,
- Fig. 1d: in um 90° gedrehter Seitenansicht.

Wie aus den Fig. 1a bis 1d hervorgeht, besteht die Vorrichtung aus einem länglichen Element 1 mit rechteckigem Querschnitt, das in seinem unteren Bereich an zwei gegenüberliegenden Seiten in Längsrichtung verlaufende Ausnehmungen 2 mit halbkreisförmigem Querschnitt zur Aufnahme der Rutenelemente aufweist, welche sich bis zum unteren Ende des länglichen Elementes 1 hin erstrecken. An dem gegenüberliegenden Ende ist ein Endstück 3 angeordnet, welches eine sich von einer Ausnehmung 2 zu der anderen Ausnehmung 2 erstreckende halbkreisförmige Nut 4 zur Aufnahme des Gummizuges der Kopfrute aufweist.

In Fig. ld ist deutlich erkennbar, daß das Endstück 3 im sich von einer Ausnehmung 2 zu der anderen Ausnehmung 2 erstreckenden Endbereich halbkreisförmig ausgebildet ist und somit dieser Endbereich parallel zu der tieferliegenden Nut 4 verläuft.

Fig. 1a wiederum zeigt, daß das Endstück oberhalb der Ausnehmungen sich in Längsrichtung erstreckende Schlitze 5 zur Aufnahme des Endes der Rutenelemente aufweist.

Um an unterschiedliche Rutendurchmesser anpaßbar zu sein, weist die Vorrichtung einen Klettbandverschluß (nicht dargestellt) zum Festlegen der Rutenelemente auf.

Die Vorrichtung kann insbesondere aus Kunststoff hergestellt sein, da dieser relativ weiche Werkstoff einen schonenden Transport der Kopfruten ermöglicht.

## Patentansprüche

1. Vorrichtung zum Transport von Kopfruten, **dadurch gekennzeichnet, daß** ein längliches Element (1) vorgesehen ist, das an zwei gegenüberliegenden Seiten in Längsrichtung verlaufende Ausnehmungen (2) mit halbkreisförmigem Querschnitt zur Aufnahme der Rutenelemente aufweist, und daß an einem Ende ein Endstück (3) vorgesehen ist, welches eine sich von einer Ausnehmung (2) zu der anderen Ausnehmung (2) erstreckende halbkreisförmige Nut (4) zur Aufnahme des Gummizuges der Kopfrute aufweist.

2. Vorrichtung gemäß Anspruch 1, **dadurch gekennzeichnet, daß** das Endstück (3) im sich von einer Ausnehmung (2) zu der anderen Ausnehmung (2) erstreckenden Endbereich halbkreisförmig ausgebildet ist.

3. Vorrichtung gemäß Anspruch 1, **dadurch gekennzeichnet, daß** das Endstück (3) oberhalb der Ausnehmungen (2) sich in Längsrichtung erstreckende Schlitze (5) zur Aufnahme des Endes der Rutenelemente aufweist.

4. Vorrichtung gemäß Anspruch 1, **dadurch gekennzeichnet, daß** ein Klettbandverschluß zum Festlegen der Rutenelemente vorgesehen ist.

5. Vorrichtung gemäß Anspruch 1, **dadurch gekennzeichnet, daß** die Vorrichtung aus Kunststoff besteht.
